# EUROPÄISCHE PATENTSCHRIFT

(11) **EP 0 458 107 B1**
(45) Veröffentlichungstag und Bekanntmachung des Hinweises auf die Patenterteilung: **10.08.1994**
(21) Anmeldenummer: 91107191.8
(22) Anmeldetag: 03.05.1991
(51) Int. Cl.: A01C 17/00, A01M 7/00

(54) **Bordcomputersystem für landwirtschaftliche Maschinen- und Gerätekombinationen**
Board computer system for combinations of agricultural machines and implements
Système d'ordinateur de bord pour combinaisons de machines et instruments agricoles

(30) Priorität: 23.05.1990 DE 4016603
(43) Veröffentlichungstag der Anmeldung: 27.11.1991
(73) Patentinhaber: Amazonen-Werke H. Dreyer GmbH & Co. KG, D-49205 Hasbergen (DE)
(72) Erfinder: Scheufler, Bernd, Dr., W-4507 Hasbergen (DE)

(56) Entgegenhaltungen:
- EP-A- 0 191 287
- EP-A- 0 201 658
- DE-A- 3 617 377
- DE-A- 3 708 324
- US-A- 4 803 626

## Beschreibung

Die Erfindung betrifft ein Bordcomputersystem für landwirtschaftliche Maschinen- und Gerätekombinationen gemäß Oberbegriff des Patentanspruches 1.

Ein derartiges Bordcomputersystem ist beispielsweise durch die europäische Patentanmeldung 02 01 658 bzw. 0191287 bekannt geworden. Bei diesem Bordcomputersystem ist vorteilhaft, daß das Bordcomputersystem unmittelbar erkennt, welche Verteilmaschine an dem Bordcomputersystem angeschlossen ist. Über dieses bekannte Bordcomputersystem läßt sich die an dem Ackerschlepper angekoppelte landwirtschaftliche Arbeitsmaschine in einfacher Weise einstellen, steuern oder regeln. Hierbei sind in dem Bordcomputersystem die Einstelldaten der Verteilmaschine fest eingespeichert.

Der Erfindung liegt die Aufgabe zugrunde, auf einfache Weise das gattungsgemäße Bordcomputersystem an neueste Entwicklungen anpaßbar zu machen.

Diese Aufgabe wird erfindungsgemäß durch die Maßnahme gemäß Kennzeichen des Patentanspruches 1 gelöst. Infolge dieser Maßnahme ist es auf einfachste Weise möglich, über eine Datenfernübertragungseinrichtung, wie Telefon- und/oder Funkabfrage, die in dem Bordcomputersystem eingespeicherten Daten zu ergänzen und/oder zu verändern und somit auch auf einfache Weise an die neuesten Entwicklungen anpaßbar zu machen. Hierbei lassen sich dann die neuen Daten und Werte telefonisch im Werk abfragen, z.B. wie Zeitansage, Wetterbericht etc..

Desweiteren sieht das Bordcomputersystem in einer besonderen Ausführung vor, daß das Bordcomputersystem mit dem Bordcomputer zusammenwirkende Sensorelemente aufweist, welche Informationen über die Beschaffenheit und den Zustand des Pflanzenbewuchses auf der zu bearbeitenden oder zu bestellenden Fläche aktuell liefert. Infolge dieser Maßnahme steuert das Bordcomputersystem selbständig aufgrund der von den Sensorelementen gelieferten Informationen die Einstellung der Arbeitswerkzeuge, Dosierorgane etc. der Arbeitsmaschine.

Im Zusammenwirken mit Verteilmaschinen, z.B. einem Düngerstreuer, ist vorgesehen, daß das Bordcomputersystem mit dem Bordcomputer zusammenwirkende Sensorelemente aufweist, daß diese Sensorelemente den Nährstoffbedarf der Pflanzen in Zusammenarbeit mit dem Bordcomputer ermitteln, und daß in Abhängigkeit des ermittelten Nährstoffbedarfes die Verteilmaschine gesteuert wird. Hierbei tasten die Sensorelemente die sich auf der zu bestreuenden Fläche befindlichen Pflanzen ab. Aufgrund der durch das Abtasten ermittelten Impulse, die von den Sensorelementen zu dem Bordcomputer übermittelt werden, ermittelt das in dem Bordcomputer eingespeicherte Auswerteprogramm den Nährstoffbedarf der Pflanzen. Aufgrund des ermittelten Nährstoffbedarfes, unmittelbar während des Streuvorganges, wird die Verteilmaschine von dem Bordcomputer gesteuert oder geregelt. Das Ermitteln des Nährstoffbedarfes läßt sich selbstverständlich auch mittels berührungslos arbeitender Sensoren durchführen.

Bei einer Verteilmaschine, beispielsweise eine Drillmaschine, ist erfindungsgemäß vorgesehen, daß das Bordcomputersystem mit dem Bordcomputer zusammenwirkende Sensorelemente aufweist, daß diese Sensorelemente die Nährstoffversorgung und die sonstige Bodenbeschaffenheit des zu bestellenden Bodens ermitteln, und daß in Abhängigkeit der ermittelten Werte die Verteilmaschine, d.h. die Ausbringmenge, wie Saatgut und/oder Dünger, gesteuert oder geregelt wird. Hierdurch wird die Maschine automatisch entsprechend der Werte, optimal gesteuert oder geregelt. Der Bediener der Maschine braucht nicht mehr von Hand einzugreifen.

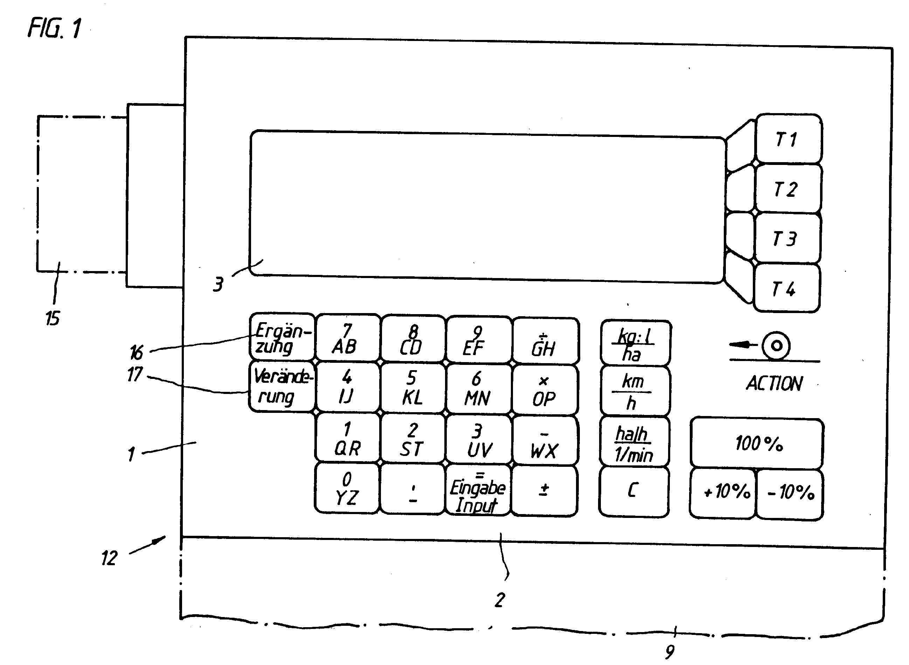

Weitere Einzelheiten der Erfindung sind den übrigen Unteransprüchen, der Beispielsbeschreibung und den Zeichnungen zu entnehmen. Hierbei zeigt
- Fig. 1: das in erfindungsgemäßer Weise als Rechner ausgebildete Bordcomputersystem,

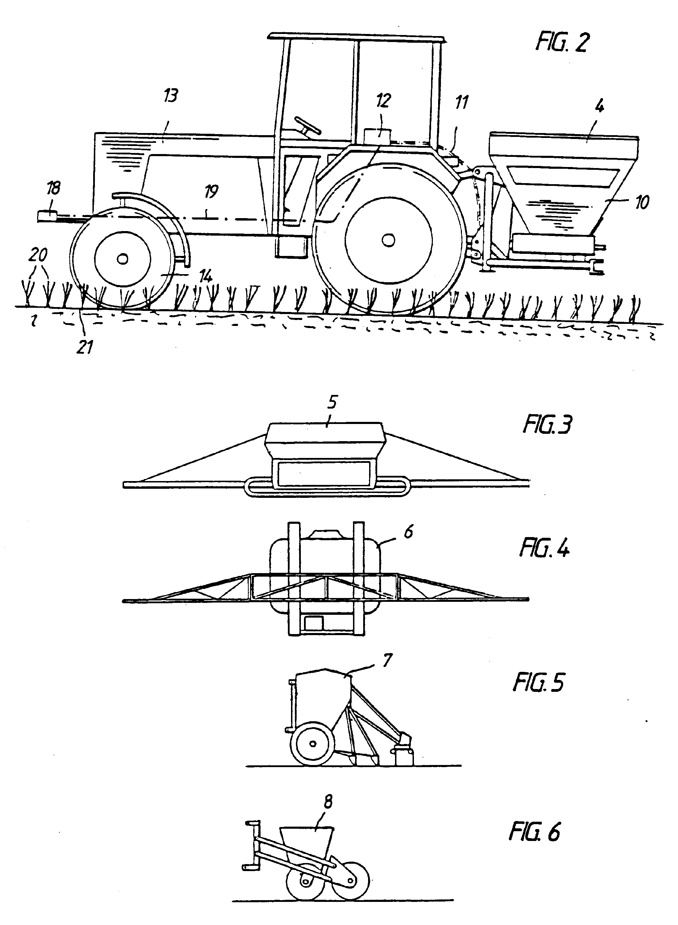

- Fig. 2: das Bordcomputersystem gemäß Fig. 1, welches die Einstellung einer hinter einem Ackerschlepper angeordneten, als Zentrifugaldüngerstreuer ausgebildeten Verteilmaschine vornimmt,
- Fig. 3: eine weitere, mittels des Bordcomputersystems einstellbare, als Pneumatikdüngerstreuer ausgebildete Verteilmaschine,
- Fig. 4: eine weitere, mittels des Bordcomputersystems einstellbare, als Feldspritze ausgebildete Verteilmaschine,
- Fig. 5: eine weitere, mittels des Bordcomputersytems einstellbare, als Drillmaschine ausgebildete Verteilmaschine und
- Fig. 6: eine weitere, mittels des Bordcomputersystems einstellbare, als Einzelkornsämaschine ausgebildete Verteilmaschine.

Das Bordcomputersystem besteht im wesentlichen aus dem Rechner 1 mit dem Tastenfeld 2 und der Anzeigevorrichtung 3. Der als Rechner 1 ausgebildete Bordcomputer ist mit dem den jeweiligen Verteilmaschinen, welche beispielsweise als Zentrifugaldüngerstreuer 4, als Pneumatikdüngerstreuer 5, als Feldspritze 6, als Drillmaschine 7 oder als Einzelkornsämaschine 8 ausgebildet sind, jeweils zugeordneten Schaltkasten 9 verbunden. Die Verbindung zwischen dem jeweiligen Schaltkasten 9 und dem Rechner 1 ist als Steckverbindung ausgebildet. Über den Schaltkasten 9 sind die den jeweiligen Verteilmaschinen zugeordneten Dosierorgane für die auszubringenden Materialien ansteuerbar.

Der Rechner 1 weist eine Speichereinheit auf, in die die normaler Weise in den bisher bekannten Streu-, Spritz -oder Sätabellen angegebenen Werte gespeichert sind. Gespeichert sind sämtliche, in den bekannten Streu-, Spritz- oder Sätabellen aufgeführten Werte. D.h., die Einstelldaten der Dosierorgane für die verschiedenen Verteilmaschinen, für sämtliche in den Streutabellen aufgeführten Düngersorten bzw. in den Sätabellen angeführten Getreidesorten oder die für die unterschiedlichen Düsengrößen eines Spritzgestänges einer Feldspritze einzustellenden unterschiedlichen Spritzdrücke befinden sich in dem Speicher des Rechners 1. Hierdurch ist es möglich, daß der Landwirt auf die bisher notwendigen Streu-, Spritz- bzw. Sätabellen zur Einstellung seiner Verteilmaschinen verzichten kann.

Die als Zentrifugaldüngerstreuer 4 ausgebildete Verteilmaschine ist bekannter Maßen mit dem tricherförmig ausgebildeten, ein dachförmiges Mittelteil aufweisenden Vorratsbehälter ausgebildet. Unterhalb der durch das dachförmige Mittelteil gebildeten trichterförmigen Behälterteile sind die rotierend angetriebenen Schleuderscheiben angeordnet. Diesen Schleuderscheiben werden die sich im Vorratsbehälter 10 befindlichen Düngemittel über mittels Schieber einstellbarer Auslauföffnungen zugeführt.

Für diesen beispielhaft erwähnten Zentrifugaldüngerstreuer 4 sind desweiteren zur Einstellung und Steuerung der Dosierorgane Funktionsverläufe im Rechner 1 eingespeichert, bei denen die Ausbringmenge in Abhängigkeit der Schieberstellung berücksichtigt ist. Hierbei sind für verschiedene Düngersorten verschiedene Abhängigkeiten in dem Rechner 1 gespeichert. Für die anderen Verteilmaschinen sind ebenfalls vergleichbare Daten abgespeichert.

Bei dem Zentrifugaldüngerstreuer 4 werden unterschiedliche Arbeitsbreiten bzw. unterschiedliche Streuprofile, also Einstellwerte für die Querverteilung der Düngemittelpartikel durch die Schaufelstellung der Wurfschaufeln auf den Schleuderscheiben, die Anbauhöhe des Schleuderstreuers, die Neigung des Schleuderstreues, die Drehzahl der Schleuderscheiben und/oder der Aufgabepunkt des Düngers auf der Schleuderscheibe bestimmt. Diese Einstelldaten und Abhängigkeiten werden in dem Rechner 1 des Bordcomputersystems abgespeichert.

Über den jeder Verteilmaschine zugeordneten Schaltkasten 9 ist der Rechner 1 des Bordcomputersystems über das Kabel 11 mit den Stellantrieben zur Schieberbetätigung bzw. zur Wurfschaufelverstellung der Wurfschaufeln auf den Schleuderscheiben, der jeweiligen Rutsche zur Aufgabepunktveränderung und evtl. zur Einstellvorrichtung für die Drehzahl der Schleuderscheiben verbunden. Diese aus dem Rechner 1 und dem Schaltkasten 9 bestehenden Einheit 12 ist im Sichtbereich des Schlepperfahrers auf dem Ackerschlepper 13 angeordnet. Das entsprechende Programm mit den den jeweiligen Verteilmaschinen zugeordneten Einstelldaten sowie den Streu-, Spritz- oder Sätabellen wird z.B. beim Zusammenstecken des Schaltkastens 9 mit dem Rechner 1 automatisch aufrufen, d.h., über eine entsprechende automatisch codierte Verbindung erkennt der Rechner die jeweils an den Ackerschlepper 13 angekoppelte Verteilmaschine, so daß immer das richtige Programm zur Ermittlung der Einstelldaten für die jeweilige Verteilmaschine angewählt wird. Über das Tastenfeld 2 ist nun bei der als Zentrifugaldüngerstreuer 4 ausgebildeten Verteilmaschine nur noch die jeweils auszustreuende Düngersorte, die gewünschte Ausbringmenge in kg/ha und die Arbeitsbreite in den Rechner einzugeben. Sofort erscheinen auf der Anzeigevorrichtung die Daten für die entsprechende Abwicklung des Streuers gegenüber der Bodenoberfläche, die sich aus den unterschiedlichen Anbauhöhen der vorderen und hinteren Schleuderscheibenkante ergeben. Nach dem manuellen Einstellen der auf der Anzeigevorrichtung 3 angezeigten Einstelldaten kann mit dem Ausbringen des Düngers begonnen werden. Durch Betätigen der Startfunktion erfolgt ein automatisches Einstellen der Ausbringmenge über eine entsprechende Schieberbetätigung der die Auslauföffnungen in unterschiedlichen Öffnungsweiten einstellenden Schieber sowie ein Einstellen der entsprechenden Schaufelstellungen der auf den Schleuderscheiben angeordneten Wurfschaufeln, evtl. der entsprechenden Drehzahl, mit der die Schleuderscheiben angetrieben werden und die Einstellung des Aufgabepunktes des Düngers auf die jeweilige Schleuderscheibe über die entsprechende Rutsche.

Weiterhin werden dem Rechner 1 auf dem Ackerschlepper 13 Impulse über den zurückgelegten Weg bzw. über die tatsächliche, momentane Fahrgeschwindigkeit von einem auf dem Ackerschlepper 13 angeordneten Fahrgeschwindigkeitssensor, der beispielsweise am Vorderrad 14 des Schleppers 13 angeordnet ist, zugeführt. Hierdurch wird die Ausbringmenge in Abhängigkeit von der Fahrgeschwindigkeit geregelt, so daß die Ausbringmenge pro Flächeneinheit bei unterschiedlichen Fahrgeschwindigkeiten, entsprechend der gewählten Sollausbringmenge pro Flächeneinheit, konstant bleibt.

Das Einstellen der Dosierorgane der Verteilmaschinen kann hierbei durch die Vorgabe eines gewünschten Ausbringmengenwertes für die zubearbeitende Fläche oder aber anhand eines in dem Bordcomputer gespeicherten Nährstoffprofiles der zubearbeitenden Fläche erfolgen. Erfolgt eine automatische Regelung der Ausbringmenge anhand eines in dem Rechner eingespeicherten Nährstoffprofiles der zubearbeitenden Fläche sind die Einstellungen für die jeweils genutzte Maschine in Abhängigkeit vom Ort auf dem Feld in den Rechner des Bordcomputersystems eingespeichert. Hierdurch wird beispielsweise erreicht, daß der zubestreuenden Fläche nur die für eine optimale Nährstoffversorgung notwendigen Düngemittel entsprechend des Nährstoffbedarfes der sich auf der zubestreuenden Fläche befindlichen Pflanzen in den genau erforderlichen Mengen zugeführt wird. Die Abbildung der zubearbeitenden Fläche in dem Rechner 1 kann beispielsweise durch eine lineare Abwicklung der zubestellenden Fläche erfolgen, wobei die Wegstrecke der linearen Abbildung in Abschnitte unterteilt wird, denen jeweils eine Speicheradresse zur Eingabe von Sollwerten zur Steuerung der landwirtschaftlichen Maschinen zugeordnet wird. Als Orientierung für das abzuarbeitende Feld lassen sich beispielsweise zum Ausstreuen des Düngers oder bei der Bearbeitung des Feldes mittels einer Feldspritze die bei der Bestellarbeit angelegten Fahrgassen heranziehen. Hierbei ist dann die zubearbeitende Fläche beispielsweise derart in dem Rechner abgebildet, daß die Fläche mittels der vorgegebenen Fahrgassen durch das Befahren jeder Fahrgasse, jeder zweiten, jeder dritten, jeder vierten usw. abzuarbeiten ist, wobei dann das entsprechende Fahrgassensystem zur Abarbeitung der zubearbeitenden Fläche entsprechend anwählbar ist.

Der Einsatz des Rechners 1 beschränkt sich selbstverständlich nicht nur auf die hier aufgezeigten Ausführungsbeispiele, sondern läßt sich für die Ermittlung der Einstellung aller in der Landwirtschaft eingesetzten Maschinen und Geräte anwenden.

Diese in dem Rechner 1 des Bordcomputersystems abgespeicherten maschinenspezifischen Daten, Einstellwerte, Streu-, Spritz- und Sätabellen sowie weitere zur Einstellung landwirtschaftlicher Maschinen und Geräte notwendigen Daten sowie für die entsprechenden, zu bearbeitenden Flächen abgespeicherten Flächen- und Nährstoffprofile sind jederzeit ergänz- oder veränderbar, so daß die entsprechenden notwendigen Daten sich auf einfache Weise an die neuesten Entwicklungen und Erkenntnisse anpassen lassen.

Das Austauschen und Ergänzen von entsprechenden Daten läßt sich mittels einer Datenfernübertragungseinrichtung vornehmen.

Weiterhin ist der Rechner 1 des Bordcomputersystems mit den mit dem Rechner 1 zusammenwirkenden Sensorelement 18 verbunden, welches über das Kabel 19 mit der Einheit 12 auf dem Ackerschlepper 13 verbunden ist. Dieses Sensorelement 18 liefert Informationen über die Beschaffenheit und den Zustand des Pflanzenbewuchses 20 der zu bearbeitenden Fläche 21. In Zusammenarbeit mit dem Rechner 1 ermittelt das Sensorelement 18 den Nährstoffbedarf der aufgewachsenen Pflanzen 20. Anhand des ermittelten Nährstoffbedarfes der Pflanzen erfolgt die Steuerung der Dosierorgane der an den Ackerschlepper 13 angehängten Verteilmaschine. Weiterhin lassen sich von dem Sensorelement 18 sonstige Bodenbeschaffenheiten des zu bestellenden oder zu bearbeitenden Bodens ermitteln, so daß in Abhängigkeit dieser ermittelten Werte die Verteilmaschinen, d.h., die Ausbringmenge wie Saatgut oder Dünger gesteuert wird.

## Patentansprüche

1. Bordcomputersystem für landwirtschaftliche Maschinen- und Gerätekombinationen, bestehend aus einem Ackerschlepper und an diesem angekoppelten landwirtschaftlichen Arbeitsmaschinen, wie beispielsweise Kreiseleggen, Rütteleggen, Drillmaschinen, Düngerstreuer und Feldspritzen etc., wobei über das Bordcomputersystem der Ackerschlepper und/oder die angekoppelte Arbeitsmaschine über die in dem Bordcomputersystem eingespeicherten und/oder eingegebenen Einstellwerte einstell-, steuer- und/oder regelbar sind, wobei die im Bordcomputersystem (1) eingespeicherten Daten über eine Eingabevorrichtung (15,16,17) ergänz- und/oder veränderbar sind, dadurch gekennzeichnet, daß die im Bordcomputersystem (1) eingespeicherten Daten über eine Datenfernübertragungseinrichtung ergänz- und/oder veränderbar sind.

2. Bordcomputersystem nach Anspruch 1, dadurch gekennzeichnet, daß die im Bordcomputersystem (1) eingespeicherten Daten über eine telefonische und/oder Funkabfrage ergänz- und/oder veränderbar sind.

3. Bordcomputersystem nach Anspruch 1, dadurch gekennzeichnet, daß die Einstellungen der Maschine (4,5,6,7,8) in Abhängigkeit vom Ort auf dem Feld in das Bordcomputersystem (1) eingespeichert sind.

4. Bordcomputersystem nach Anspruch 1, dadurch gekennzeichnet, daß das Bordcomputersystem (1) mit dem Bordcomputer zusammenwirkende Sensorelemente (18) aufweist, welche Informationen über die Beschaffenheit und den Zustand des Pflanzenbewuchses (20) auf der zu bearbeitenden oder zu bestellenden Fläche aktuell liefert.

5. Bordcomputersystem nach Anspruch 1, dadurch gekennzeichnet, daß das Bordcomputersystem (1) mit dem Bordcomputer zusammenwirkende Sensorelemente (18) aufweist, daß diese Sensorelemente (18) den Nährstoffbedarf der Pflanzen in Zusammenarbeit mit dem Bordcomputer ermitteln, und daß in Abhängigkeit des ermittelten Nährstoffbedarfes die Verteilmaschine (4,5,6,7,8) gesteuert wird.

6. Bordcomputersystem nach Anspruch 1, dadurch gekennzeichnet, daß das Bordcomputersystem (1) mit dem Bordcomputer zusammenwirkende Sensorelemente (18) aufweist, daß diese Sensorelemente (18) die Nährstoffversorgung und die sonstige Bodenbeschaffenheit des zu bestellenden Bodens ermittelt, und daß in Abhängkeit der ermittelten Werte die Verteilmaschine (6,7,8,9), d.h. die Ausbringmenge, wie Saatgut oder Dünger, gesteuert wird.

7. Bordcomputersystem nach Anspruch 1, wobei die Verteilmaschine als Düngerstreuer ausgebildet ist, dadurch gekennzeichnet, daß die Einstellwerte für die Querverteilung in den Bordcomputer (1) eingespeichert sind.

8. Bordcomputersystem nach Anspruch 6, wobei die Verteilmaschine als Schleuderdüngerstreuer ausgebildet ist, dadurch gekennzeichnet, daß in dem Bordcomputersystem (1) Einstellwerte für die Querverteilung, wie die Schaufelstellung auf den Schleuderscheiben, die Anbauhöhe des Schleuderstreuers, die Neigung des Schleuderstreuers, die Drehzahl der Schleuderscheiben und/oder der Aufgabepunkt des Düngers auf der Schleuderscheibe eingespeichert sind und zur Anzeige gebracht werden und/oder automatisch die Einstellungen über den Bordcomputer vorgenommen werden.

9. Bordcomputersystem nach einem oder mehreren der vorstehenden Ansprüche, dadurch gekennzeichnet, daß die Sensorelemente (18) als Ultraschallsensoren ausgebildet sind.

10. Bordcomputersystem nach einem oder mehreren der vorstehenden Ansprüche, dadurch gekennzeichnet, daß die Sensorelemente (18) als Infrarotsensoren ausgebildet sind.

## Claims

1. On-board computer system for agricultural combinations of machines and implements, comprising a tractor and agricultural production machines, which are connected to said tractor, such as, for example, rotary-type harrows, reciprocating harrows, seed drills, fertiliser broadcasters and field sprayers, etc., the tractor and/or the connected production machine being adjustable, controllable and/or regulatable by the on-board computer system via the control values stored and/or inputted in the on-board computer system, the data which is stored in the on-board computer system (1) being replenishable and/or variable via an inputting device (15, 16, 17), characterised in that the data, which is stored in the on-board computer system (1), is replenishable and/or variable via a remote data transferring means.

2. On-board computer system according to claim 1, characterised in that the data, which is stored in the on-board computer system (1), is replenishable and/or variable via a telephonic and/or radio interrogation.

3. On-board computer system according to claim 1, characterised in that the adjustments of the machine (4, 5, 6, 7, 8) are stored in the on-board computer system (1) in dependence on the location in the field.

4. On-board computer system according to claim 1, characterised in that the on-board computer system (1) has sensor elements (18), which co-operate with the on-board computer and actually supply information about the nature and state of the vegetation (20) on the area to be treated or cultivated.

5. On-board computer system according to claim 1, characterised in that the on-board computer system (1) has sensor elements (18), which co-operate with the on-board computer, in that these sensor elements (18) determine the nutrient requirement of the plants in co-operation with the on-board computer, and in that the distributor (4, 5, 6, 7, 8) is controlled in dependence on the determined nutrient requirement.

6. On-board computer system according to claim 1, characterised in that the on-board computer system (1) has sensor elements (18), which co-operate with the on-board computer, in that these sensor elements (18) determine the supply of nutrients and the remaining nature of the ground to be cultivated, and in that the distributor (6, 7, 8, 9) , i.e. the delivery quantity, such as seeds or fertilisers, is controlled in dependence on the determined values.

7. On-board computer system according to claim 1, wherein the distributor is a fertiliser broadcaster, characterised in that the control values for cross-distribution are stored in the on-board computer (1).

8. On-board computer system according to claim 6, wherein the distributor is a centrifugal fertiliser broadcaster, characterised in that control values for the cross-distribution, such as the vane position on the centrifugal discs, the attachment height of the centrifugal broadcaster, the inclination of the centrifugal broadcaster, the rotational speed of the centrifugal discs and/or the delivery point of the fertiliser on the centrifugal disc, are stored in the on-board computer system (1) and displayed and/or the adjustments are automatically effected via the on-board computer.

9. On-board computer system according to one or more of the preceding claims, characterised in that the sensor elements (18) are ultrasonic sensors.

10. On-board computer system according to one or more of the preceding claims, characterised in that the sensor elements (18) are infra-red sensors.

## Revendications

1. Système d'ordinateur de bord pour des combinaisons de machines et instruments agricoles comprenant un tracteur auquel est attelée une machine agricole comme par exemple des herses rotatives, des herses vibrantes, des semoirs en lignes, des distributeurs d'engrais et des pulvérisateurs agricoles, etc, le système d'ordinateur de bord réglant, commandant et/ou régulant le tracteur agricole et /ou la machine attelée à celui-ci à partir de valeurs de réglage enregistrées dans le système d'ordinateur de bord et/ou introduites dans celui-ci, les données enregistrées dans le système d'ordinateur de bord (1) pouvant être complétées et/ou modifiées par un dispositif d'entrée (15, 16, 17), système caractérisé en ce que les données enregistrées dans le système d'ordinateur de bord (1) peuvent être complétées et/ou modifiées par une installation de télétransmission de données.

2. Système d'ordinateur de bord selon la revendication 1, caractérisé en ce que les données enregistrées dans le système d'ordinateur de bord (1) peuvent être complétées et/ou modifiées par une interrogation téléphonique et/ou radiophonique.

3. Système d'ordinateur de bord pour des combinaisons de machines et instruments agricoles selon la revendication 1, caractérisé en ce que les réglages de la machine (4, 5, 6, 7, 8) sont enregistrés dans le système d'ordinateur de bord (1) en fonction de l'emplacement sur le champ.

4. Système d'ordinateur de bord selon la revendication 1, caractérisé en ce que le système d'ordinateur de bord (1) comporte des éléments de capteur (18) coopérant avec l'ordinateur de bord pour fournir des informations concernant les caractéristiques et l'état de développement des plantes (20) de la surface en cours de traitement ou de travail.

5. Système d'ordinateur de bord selon la revendication 1, caractérisé en ce que le système d'ordinateur de bord (1) comporte des éléments de capteur (18) coopérant avec l'ordinateur de bord, ces éléments de capteur (18) déterminant la demande en matière nutritive des plantes en coopérant avec l'ordinateur de bord et en ce qu'en fonction de la demande de matière nutritive ainsi déterminée, on commande la machine distributrice (4, 5, 6, 7, 8).

6. Système d'ordinateur de bord selon la revendication 1, caractérisé en ce que le système d'ordinateur de bord (1) comporte des éléments de capteurs (18) coopérant avec l'ordinateur de bord, ces éléments de capteur (18) déterminant l'alimentation en matière nutritive et autres caractéristiques du sol à traiter et en ce qu'en fonction des valeurs ainsi déterminées, on commande la machine distributrice (6, 7, 8, 9) c'est-à-dire les quantités à distribuer en semence ou en engrais.

7. Système d'ordinateur de bord selon la revendication 1 dans la machine distributrice est un distributeur d'engrais, caractérisé en ce que les valeurs de réglage pour la distribution transversale sont enregistrées en mémoire dans l'ordinateur de bord (1).

8. Système d'ordinateur de bord selon la revendication 6, dans lequel la machine distributrice est un épandeur centrifuge, caractérisé en ce que le système d'ordinateur de bord (1) contient les valeurs de réglage pour la distribution transversale comme la position des palettes des disques d'épandage, la hauteur d'attelage de l'épandeur centrifuge, l'inclinaison de l'épandeur, la vitesse de rotation des disques d'épandage et/ou le point de réception de l'engrais sur les disques d'épandage et ces informations sont affichées et/ou elles sont proposées automatiquement par l'ordinateur de bord.

9. Système d'ordinateur de bord selon l'une ou plusieurs des revendications précédentes, caractérisé en ce que les éléments de capteur (18) sont des capteurs à ultrasons.

10. Système d'ordinateur de bord selon l'une ou plusieurs des revendications précédentes, caractérisé en ce que les éléments de capteur (18) sont des capteurs à infrarouges.
